# DEMANDE DE BREVET EUROPEEN

(11) **EP 0 545 775 A1**
(43) Date de publication de la demande: **09.06.1993**
(21) Numéro de dépôt: 92403166.9
(22) Date de dépôt: 25.11.1992
(51) Int. Cl.: C01G 33/00, C01G 35/00, C01B 13/34

(54) **Pérovskites à base de tantale ou de niobium et leur procédé de préparation**

(30) Priorité: 06.12.1991 FR 9115136
(71) Demandeur: RHONE-POULENC CHIMIE, 92408 Courbevoie Cédex (FR)
(72) Inventeur: Nussbaum, Hubert, F-60440 Boissy Fresnoy (FR)
(74) Mandataire: Dutruc-Rosset, Marie-Claude

(57) **Abrégé**

La présente invention concerne des compositions du type pérovskite à base de tantale ou de niobium et à titre d'autre élément constitutif d'un élément choisi dans le groupe comprenant les alcalins, les alcalino-terreux, les éléments de transition, les éléments du groupe Ib, les terres-rares et qui sont caractérisées en ce qu'elles présentent une homogénéité telle que les domaines d'hétérogénéité sont inférieurs ou égaux à 1µm³.

Ces compositions sont obtenues par un procédé comprenant les étapes suivantes :
- on prépare un mélange comprenant d'une part, un sol d'oxyde de tantale ou un sol d'oxyde de niobium et d'autre part, des sels des autres éléments constitutifs de la composition;
- on sèche ledit mélange;
- on calcine le produit séché.

## Description

La présente invention concerne des compositions du type pérovskite à base de tantale et/ou de niobium ainsi que leur préparation.

Au cours de ces dernières années, de nombreuses recherches ont été effectuées afin de mettre au point des procédés de préparation de céramiques de ce type.

En effet, celles-ci sont intéressantes pour de nombreuses applications mettant en oeuvre leurs propriétés diélectriques, comme par exemple les résonateurs diélectriques hyperfréquence.

Le procédé de synthèse le plus couramment utilisé consiste à faire réagir en phase solide, à haute température, les différents oxydes et/ou les différents sels contenant un anion volatil, du type carbonate par exemple, des éléments constitutifs de la phase désirée.

Un tel procédé présente un inconvénient majeur, il conduit à des produits de faible réactivité.

On entend par là des produits qui nécessitent une température élevée de calcination, par exemple au moins 1300°C, pour obtenir la phase recherchée, une pureté et une homogénéité chimique suffisantes.

On entend aussi par là des produits qui, pour être frittés doivent subir un traitement thermique à des températures élevées et sur des durées longues, par exemple au moins 1600°C sur plusieurs heures. Ces traitement à températures élevées sont d'autant plus gênants qu'ils entraînent une perte en éléments volatils du type plomb et zinc dans le cas de compositions comprenant ces éléments.

En outre, pour certains types de compositions, il est intéressant de faire apparaître dans le produit une surstructure, cette surstructure étant obtenue par un traitement thermique. Il s'avère que les produits obtenus par réaction solide-solide ne voient se développer substantiellement une telle surstructure qu'au bout d'un temps de traitement assez long, généralement de plusieurs dizaines d'heures.

Des procédés par coprécipitation des éléments constitutifs des compositions ont été aussi proposés. Néanmoins, ces procédés n'apportent pas d'amélioration importante quant à la réactivité des produits obtenus.

Un objet de l'invention est donc des compositions pérovskites à base de tantale ou de niobium à réactivité améliorée.

Un autre objet de l'invention est la mise au point d'un procédé permettant d'obtenir de telles compositions.

Ainsi les compositions du type pérovskite, selon un premier mode de réalisation de l'invention, sont à base de tantale ou de niobium et, à titre d'autre élément constitutif, d'un élément choisi dans le groupe comprenant les alcalins, les alcalino-terreux, les éléments de transition, les éléments du groupe Ib, les terres rares, et elles sont caractérisées en ce qu'elles présentent une homogénéité telle que les domaines d'hétérogénéité sont inférieurs ou égaux à 1µm³.

En outre, les compositions du type pérovskite, selon un second mode de réalisation de l'invention, sont à base d'un premier élément constitutif choisi dans le groupe comprenant les alcalino-terreux et les terres rares et d'un second élément constitutif qui est le niobium et le tantale, le second élément étant partiellement substitué par un troisième élément choisi dans le groupe comprenant les alcalins, les alcalino-terreux, les éléments de transition, les terres rares, les éléments des groupes IIIb et Vb, et elles sont caractérisées en ce qu'elles présentent une homogénéité telle que les domaines d'hétérogénéité sont inférieurs ou égaux à 1µm³.

L'invention concerne aussi des compositions présentant une surstructuration, caractérisées en ce qu'elles sont obtenues par traitement thermique de compositions du type précédent.

Par ailleurs, le procédé de préparation, selon l'invention, de compositions du type pérovskite à base de tantale ou de niobium, est caractérisé en ce qu'il comprend les étapes suivantes :
- on prépare un mélange comprenant un sol d'oxyde de tantale ou un sol d'oxyde de niobium et les sels des éléments constitutifs de la composition;
- on sèche ledit mélange;
- on calcine le produit séché.

Enfin, un dernier objet de l'invention est constitué par un matériau fritté caractérisé en ce qu'il est obtenu par frittage d'une composition du type décrit ci-dessus ou d'une composition préparée selon le procédé précité.

Le procédé selon l'invention permet d'obtenir des produits de bonne pureté phasique à des températures de l'ordre de 1000°C, c'est-à-dire à des températures inférieures d'environ 200 -300°C à celles des procédés de l'art antérieur. Les produits de l'invention frittent facilement puisqu'il est possible d'obtenir une densité d'au moins 90% de la densité théorique en 3 heures, soit une durée de l'ordre de 5 à 10 fois inférieure aux durées nécessaires pour les produits obtenus par la voie en phase solide.

Enfin, il est possible d'obtenir en quelques heures des produits présentant une surstructure.

Mais d'autres avantages et caractéristiques apparaîtront plus clairement à la lecture de la description et des exemples concrets mais non limitatifs qui vont suivre ainsi que des figures annexées dans lesquelles :
- la figure 1 représente le spectre RX d'une composition selon l'invention à base de zinc et de tantale, calcinée à 1000°C.
- la figure 2 représente un agrandissement d'un spectre RX d'une composition du même type selon l'invention traitée à 1450°C.
- la figure 3 représente le spectre RX d'une composition du même type mais obtenue par réaction solide, calcinée à 1100°C.

L'invention concerne diverses compositions du type pérovskites à base de tantale et/ou de niobium.

Par pérovskites, on entend des compositions de structure de base du type ABO₃, formule dans laquelle A est un élément substitué ou non coordonné à 12 atomes d'oxygène et B, substitué ou non, est un élément coordonné à 6 atomes d'oxygène.

Selon un premier mode de réalisation, les compositions de l'invention sont à base de tantale et/ou de niobium. Elles comportent à titre d'autre élément constitutif un élément choisi dans le groupe comprenant les alcalins, les alcalino-terreux, les éléments de transition, les éléments du groupe Ib et les terres rares.

Il est à noter, ici et pour toute la description, que les colonnes des éléments cités correspondent à la classification périodique des éléments publiée dans le Supplément au Bulletin de la Société Chimique de France n° 1 (janvier 1966).

On entend par éléments de transition ceux des groupes IIIa à IIb, par terres-rares les éléments dont le numéro atomique varie de 57 à 71 ainsi que l'yttrium.

Plus particulièrement, on peut citer les compositions de formule ABO₃ (I) dans laquelle A est un alcalin ou un élément de transition, plus particulièrement un élément du groupe Ib, B étant le niobium et/ou le tantale. On peut mentionner ainsi les compositions suivantes : KNbO₃, KTaO₃, K(Nb,Ta)O₃, RbTaO₃, AgNbO₃, AgTaO₃, NaTaO₃.

On peut citer aussi les compositions de formule AₓBO₃ dans laquelle A est une terre rare ou un alcalino-terreux, B étant le tantale et/ou le niobium, x valant 0,33 ou 0,5.

On peut donner ainsi à titre d'exemple les compositions suivantes : Ce_{0,33}BO₃, Y_{0,33}TaO₃, Ca_{0,5}TaO₃, La_{0,33}BO₃, Nd_{0,33}BO₃.

Selon un second mode de réalisation, les compositions de l'invention sont du type substitué. Ainsi, elles sont à base d'un premier élément constitutif choisi dans le groupe comprenant les alcalino-terreux et les terres rares et d'un second élément constitutif qui est le niobium ou le tantale, le second élément étant partiellement substitué par un troisième élément choisi dans le groupe comprenant les alcalins, les alcalino-terreux, les éléments de transition, les terres rares, les éléments des groupes IIIb, Vb.

Plus précisément, selon ce second mode de réalisation, on peut citer les compositions dans lesquelles le premier élément est un alcalino-terreux, le second le tantale, le troisième un alcalino-terreux ou un élément de transition, plus particulièrement le magnésium ou le zinc.

On peut ainsi mentionner les compositions de formule A(B'_{0,33}B_{0,67})O₃ (II) dans laquelle A est un alcalino-terreux, plus particulièrement le baryum ou le strontium, B le tantale ou le niobium et B' un alcalino-terreux, plus particulièrement le calcium, le magnésium, le strontium; un élément de la première série des éléments de transition (ligne 4 du tableau périodique), tel que Co, Cu, Fe, Mn, Ni, Zn; un élément de la seconde série des éléments de transition (ligne 5) tel que Cd.

Ainsi, on peut donner à titre d'exemple :
Ba(Ca_{1/3}B_{2/3})O₃, Ba(Co_{1/3}B_{2/3})O₃; Ba(Mg_{1/3}B_{2/3})O₃; Ba(Zn_{1/3}B_{2/3})O₃; Ca(Ni_{1/3}B_{2/3})O₃; Sr(Mg_{1/3}B_{2/3})O₃; Sr(Co_{1/3}B_{2/3})O₃; Sr(Zn_{1/3}B_{2/3})O₃.

On peut aussi mentionner les compositions de formule A(B'_{0,5}B_{0,5})O₃ (III) dans laquelle A et B sont définis comme pour la formule (II), B' est un alcalino-terreux tel que Mg et Ca notamment, une terre rare, un élément de la première série des éléments de transition tels que par exemple Co, Mn et Fe, un élément du groupe IIIb tel que par exemple In, un élément du groupe Vb tel que par exemple Bi.

Ainsi, on peut citer :
Ba(Bi_{1/2}B_{1/2})O₃; Ba(Sm_{1/2}B_{1/2})O₃; Ba(Fe_{1/2}B_{1/2})O₃; Ba(Pr_{1/2}B_{1/2})O₃; Ca(Fe_{1/2}B_{1/2})O₃; Ca(Gd_{1/2}B_{1/2})O₃; Sr(Fe_{1/2}B_{1/2})O₃; Sr(Ga_{1/2}B_{1/2})O₃; Sr(Gd_{1/2}B_{1/2})O₃; Sr(La_{1/2}B_{1/2})O₃.

On peut citer enfin les produits de formule A A(B_{0,75}B'_{0,25})0₃ (IV) dans laquelle A est un alcalino-terreux, B le tantale ou le niobium, B' un alcalin comme par exemple Ba(Na_{0,25}Ta_{0,75})O₃.

On peut citer enfin les pérovskites de formule (V) A(B'_{0,5}B_{0,5})O_{2,75} dans lesquelles A est un alcalino-terreux. B le tantale ou le niobium et B' est un alcalino-terreux.

L'une des caractéristiques intéressantes des compositions du type pérovskite de l'invention résulte dans leur très bonne homogénéité de composition, mesurée par spectroscopie à dispersion d'énergie (EDX) en utilisant une micro-sonde de microscopie électronique à balayage (MEB).

En effet, celle-ci est telle que les domaines d'hétérogénéité sont inférieurs ou égaux à 1 µm³.

Habituellement, les compositions non broyées selon l'invention sont sous forme de poudre dont les particules présentent un diamètre compris entre 0,2 et 10µm.

En outre, les compositions selon l'invention présentent une pureté phasique telle que le taux d'impuretés ne gêne pas les propriétés d'usage de ces compositions.

Par ailleurs, les compositions selon l'invention présentent une caractéristique intéressante sur le plan de la densification.

En effet, elles peuvent être frittées à des températures plus basses et pendant des temps plus courts. Ceci est particulièrement avantageux pour les compositions présentant un élément volatil tel que le zinc car on controle ainsi les pertes en cet élément.

En outre, les compositions de l'invention présentent une grande facilité à la surstructuration.

Le problème de la surstructuration s'applique aux pérovskites dans lesquelles l'élément B est partiellement substitué. Dans les produits de ce type, il y a, en effet, une répartition aléatoire du tantale et du niobium et de l'élément de substitution. Néanmoins, on peut obtenir une répartition régulière de ces deux éléments dans les sites; c'est la surstructure. Les différences en charge et en taille entre l'élément B et l'élément de substitution jouent un rôle important dans la formation de cette surstructure qui s'obtient par traitement thermique du produit.

Cette surstructure a pour conséquence de conférer aux produits obtenus des propriétés améliorées.

La surstructuration concerne donc notamment les compositions selon le second mode de réalisation décrites plus haut, du type substitué et plus précisément les produits à base d'alcalino-terreux et de niobium et plus particulièrement de tantale, le niobium ou le tantale étant substitué par un alcalino-terreux ou un élément de transition, comme par exemple les compositions Ba(Zn_{0,33}Ta_{0,67})O₃ ou Ba(Mg_{0,33}Ta_{0,67})O₃.

Dans le cas des produits de l'invention, la surstructuration peut commencer au bout d'une à trois heures de traitement seulement.

Cette surstructuration peut être mise en évidence et suivie par l'apparition et le développement du pic (1,O,O) sur les spectres RX.

Un procédé de préparation de compositions du type pérovskite à base de tantale et/ou de niobium va maintenant être décrit.

On précisera ici que le procédé qui va être décrit s'applique à la préparation des compositions étudiées ci-dessus. Cependant, il s'applique plus généralement à la préparation de toutes pérovskites à base de tantale et/ou de niobium, et notamment à celles à base de plomb comme élément constitutif ou comme élément de substitution. On pourra citer plus particulièrement les compositions de formule (I), (II) ou (III) dans lesquelles A et B' peuvent être le plomb.

Le procédé de l'invention comprend les étapes suivantes :
- on prépare un mélange comprenant un sol d'oxyde de tantale et/ou un sol d'oxyde niobium et les sels des éléments constitutifs de la composition;
- on sèche ledit mélange;
- on calcine le produit séché.

On entend ici par sol d'oxyde de tantale ou de niobium toute suspension substantiellement stable d'espèces contenant ces éléments, ces espèces étant généralement à base d'oxyde et/ou d'oxyhydroxyde de ces éléments.

Les sols de tantale ou de niobium utilisés dans la première étape du procédé selon l'invention sont obtenus de façon connue en soi.

Ainsi, il est connu de traiter une solution alcoolique d'alcoxyde de tantale ou de niobium avec une solution comprenant de l'eau, un alcool et éventuellement un catalyseur basique du type de l'ammoniaque par exemple. On peut ainsi obtenir un sol dans un mélange eau-alcool, que l'on peut séparer et peptiser en milieu aqueux si nécessaire.

Il est de même possible d'hydrolyser une solution de chlorure de niobium.

Le précipité résultant est de préférence lavé, notamment à l'eau, selon le degré de pureté désiré. Habituellement, on lave le précipité jusqu'à ce que le test d'argentimétrie soit négatif (précipitation de AgCl₂ dans le milieu).

Si l'on effectue un tel lavage, il peut être nécessaire d'ajouter un agent évitant la peptisation du précipité, comme par exemple le nitrate d'ammonium.

Enfin, le précipité, lavé ou non, est peptisé selon les méthodes connues.

Habituellement, on utilise des sols ayant une taille de particules élémentaires de 10 à 70 nm, ces particules pouvant former des agglomérats de 100 à 500 nm.

Outre les sols d'oxyde de tantale et/ou d'oxyde de niobium, on utilise les sels des éléments constitutifs de la composition désirée, décrits auparavant.

Les éléments constitutifs sont utilisés sous la forme de sels d'acides organiques ou inorganiques solubles dans le milieu où doit se dérouler la réaction qui est généralement l'eau, mais qui peut être aussi un milieu mixte aqueux/organique.

Tous les acides inorganiques ou organiques conviennent à la mise en oeuvre du procédé dans la mesure où ils forment des sels solubles en milieu aqueux, organique ou leur mélange, avec les éléments constitutifs de la composition.

Ainsi, on peut choisir les nitrates, les chlorures et sulfates, comme sels d'acides inorganiques, les nitrates étant les sels préférés.

Concernant les sels d'acides organiques et selon un second mode particulier de l'invention, ceux-ci sont choisis parmi les sels d'acides carboxyliques aliphatiques saturés ou parmi les sels d'acides hydroxycarboxyliques.

Ainsi, au titre d'acides carboxyliques aliphatiques saturés, on peut citer les formiates, les acétates, les propionates.

Quant aux acides hydroxycarboxyliques, on utilise habituellement les citrates.

La mise en présence des éléments se fait par mélange du sol avec les sels ou les solutions de sel. Ce mélange pourra se faire par exemple par introduction du sol dans la solution contenant les sels ou inversement, l'ordre d'introduction pouvant dépendre de la stabilité du sol en fonction du pH.

Bien entendu, les proportions des divers éléments sont ajustées en fonction de la composition du précurseur.

On travaille dans des conditions telles que l'on évite la précipitation des sels, ce qui implique donc que l'on soit à un pH suffisamment acide.

Par ailleurs, il faut se situer dans un domaine de concentration des éléments, tel qu'il n'y ait pas apparition d'un gel, mais obtention d'un mélange des éléments dans une phase liquide ou d'une suspension homogène du ou des éléments du sol dans la solution des autres éléments. Ceci est obtenu en jouant sur la dilution desdits éléments.

En général, la concentration des sels dans le mélange réactionnel est comprise entre 0,1 et 5M.

On travaille en général à la température ambiante ou à une température voisine de l'ambiante. Si nécessaire, on peut travailler à une température plus élevée pour utiliser un milieu réactionnel dans lequel les concentrations en réactifs sont plus élevées.

La suspension ou mélange ainsi obtenu est ensuite séché.

On peut utiliser tout moyen connu de séchage, mais de préférence ce séchage se fait par atomisation.

On peut utiliser tout atomiseur classique, par exemple à turbine ou à buse.

Dans ce cas, la température en début de séchage des gaz est habituellement comprise entre 200 et 300°C, par exemple voisine de 250°C, celle de sortie peut varier entre 120 et 200°C. On utilise une pression d'air comprise par exemple entre 2 et 3 bars.

Selon un mode de réalisation particulier, on sèche ledit mélange par injection de celui-ci dans un gaz ayant une vitesse suffisante pour l'atomiser.

Cependant, selon un mode de réalisation préféré de l'invention, le séchage est effectué dans un réacteur "flash", par exemple du type mis au point par la Demanderesse et décrit notamment dans les brevets français n° 2 257 326, 2 419 754, 2 431 321. Dans ce cas, les gaz sont animés d'un mouvement hélicoïdal et s'écoulent dans un puits-tourbillon. La suspension est injectée suivant une trajectoire confondue avec l'axe de symétrie des trajectoires hélicoïdales des gaz, ce qui permet de transférer parfaitement la quantité de mouvement des gaz aux particules de cette suspension. Par ailleurs, le temps de séjour des particules dans le réacteur est extrêmement faible, il est en général inférieur à 1/10 de seconde, ce qui supprime tout risque de surchauffe par suite d'un contact trop long avec les gaz.

Selon les débits respectifs des gaz et de la suspension, la température d'entrée des gaz est comprise entre 400 et 900°C, la température du solide séché entre 150 et 300°C.

On obtient un produit sec présentant une granulométrie de l'ordre de quelques microns, plus particulièrement comprise entre 0,2 et 10 microns.

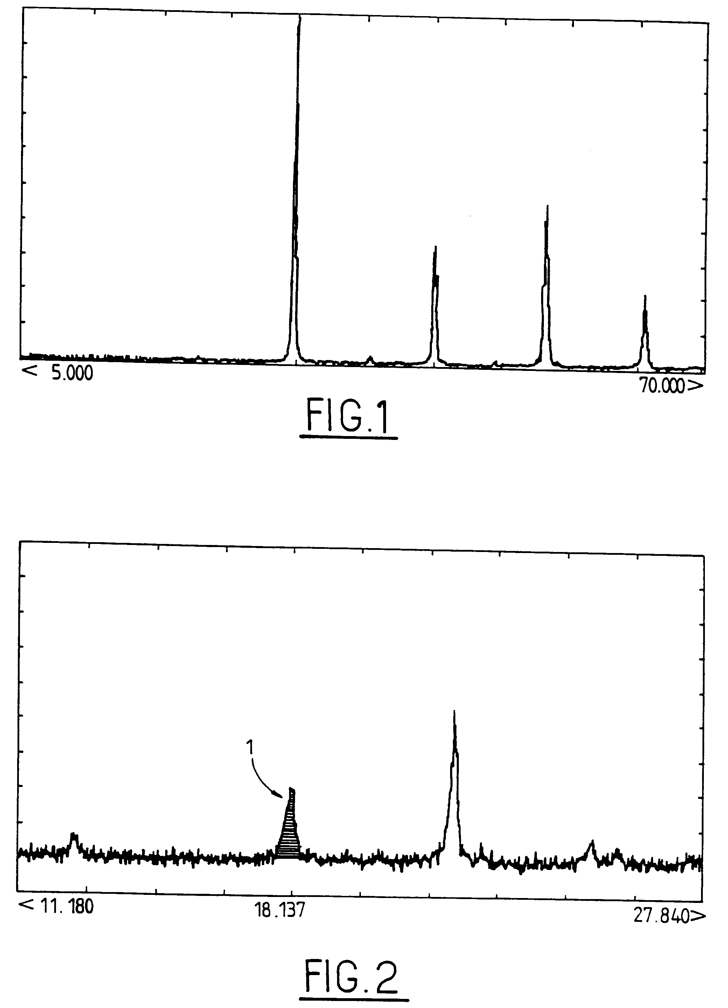

En ce qui concerne le réacteur flash mentionné plus haut, on pourra se référer à la figure 1 de la demande de brevet français n° 2 431 321.

Ledit réacteur est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure de la chambre de combustion est munie d'une ouverture permettant l'introduction de ta phase combustible.

D'autre part la chambre de combustion comprend un cylindre interne coaxial, définissant ainsi à l'intérieur de celle-ci une zone centrale et une zone périphérique annulaire et présentant des perforations se situant pour la plupart vers la partie supérieure de ladite chambre. Celle-ci comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques.

Enfin, un tuyau coudé débouche dans le passage réduit, dont l'extrémité s'ouvre dans l'axe de la zone centrale.

La phase gazeuse animée d'un mouvement hélicoïdal (par la suite phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact.

La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélicoïdale sont en contact.

Par la suite le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisés près et au-dessous du passage réduit, avant de diverger dans toutes les directions.

On introduit ensuite la substance à traiter sous forme de liquide par le tuyau précité.

Le liquide est alors fractionné en une multitude de gouttes, chacune d'elles étant transportée par un volume de gaz et soumise à un mouvement créant un effet centrifuge.

Habituellement, le débit du liquide est compris entre 0,03 et 10 m/s.

Le rapport entre la quantité de mouvement propre de la phase hélicoïdale à celui du liquide doit être élevé. En particulier il est d'au moins 100 et de préférence compris entre 1000 et 10000.

Les quantités de mouvement au niveau du passage réduit sont calculées en fonction des débits d'entrée du gaz et de la substance à traiter, ainsi que de la section dudit passage. Une augmentation des débits entraîne un grossissement de la taille des gouttes.

Dans ces conditions, le mouvement propre des gaz est imposé dans sa direction et son intensité aux gouttes de la substance à traiter, séparées les unes des autres dans la zone de convergence des deux courants.

La vitesse du liquide est de plus réduite au minimum nécessaire pour obtenir un flot continu.

Le rapport de la masse du liquide et du gaz est bien évidemment choisi en fonction de plusieurs facteurs comme la température du fluide et l'opération à effectuer, comme la vaporisation du liquide.

Il est à noter que cette représentation et ce fonctionnement du réacteur "flash" ne constituent qu'un exemple et que d'autres réalisations et fonctionnements sont envisageables.

Après séchage du mélange comprenant le sol d'oxyde de tantale ou d'oxyde de niobium et les éléments constitutifs de la composition, la poudre récupérée est calcinée.

Cette calcination a pour but d'éliminer les anions des sels, comme par exemple les nitrates, ainsi que de former la ou les phases désirées.

Cette calcination se fait à une température suffisamment élevée pour qu'il y ait diffusion des éléments et ainsi obtention desdites phases, mais pas trop haute pour éviter le frittage.

Ainsi, la calcination se fait généralement à une température située entre 900 et 1200°C, plus particulièrement entre 1000 et 1100°C. La durée de la calcination est habituellement comprise entre une demi-heure et 10 heures. Cette durée est d'autant plus faible que la température est élevée.

La calcination peut se faire sous atmosphère statique ou sous balayage, sous air ou sous oxygène ou un mélange air-oxygène.

Il est à noter qu'une étape de broyage préalable à la calcination n'est pas nécessaire.

Toutefois, on ne sortirait pas du cadre de la présente invention en effectuant une telle opération.

A la fin de la calcination, le produit peut subir un traitement de désagglomération pour obtenir la surface spécifique adéquate. Ce traitement a pour effet de détruire seulement les agglomérats sans atteindre les agrégats et il peut se faire dans des conditions douces et non polluantes, par exemple par un broyeur du type jet d'air.

L'invention concerne enfin un matériau fritté obtenu par traitement thermique d'une composition du type pérovskite telle que précédemment décrite, ou bien encore obtenue par le procédé détaillé ci-dessus.

Le frittage de la composition est effectué d'une façon classique et avantageusement, il n'est pas nécessaire de procéder dans des conditions particulières, comme par exemple sous une atmosphère comprenant un élément volatil ou sous pression.

Ainsi, on peut fritter sous vide, sous air et/ou sous oxygène.

La température de frittage est fonction de la nature de la composition. Elle est habituellement comprise entre 1300 et 1500°C.

La durée du frittage est habituellement comprise entre 2 et 10 heures.

Enfin, on peut surstructurer les compositions décrites ci-dessus.

Cette surstructuration peut se faire par un traitement thermique.

Ce traitement peut se faire après le frittage ou en même temps que celui-ci. Il peut aussi se faire préalablement à l'étape de frittage. La température sera fonction notamment de la nature de la composition et du moment auquel le traitement de surstructuration aura lieu. Par exemple s'il a lieu avant le frittage, il se fera à une température inférieure à la température de frittage, ce qui pourra nécessiter un temps de traitement relativement long. Dans les autres cas, la température de surstructuration peut être comprise par exemple entre 1400 et 1500°C.

L'invention concerne enfin les compositions présentant une surstructuration qui sont obtenues à partir de compositions du type décrit précédemment, notamment par traitement thermique, ces compositions surstructurées pouvant être des compositions frittées ou non.

Des exemples concrets mais non limitatifs vont maintenant être présentés.

### EXEMPLE 1 : Préparation de Ba(Zn_{1/3}Ta_{2/3})O₃

### Préparation de la poudre Ba(Zn_{1/3}Ta_{2/3})O₃

On dissout 9,6 g de Zn(NO₃)₂, 6H₂O dans 100 g d'eau et 25,2 g de Ba(NO₃)₂ dans 300 g d'eau. On mélange les deux solutions. Puis on ajoute à cette solution 296 g de sol de Ta₂O₅ (soit 14,21 g de Ta₂O₅). Ce sol a été obtenu par réaction de pentaéthoxyde de tantale avec l'eau dans l'éthanol en présence d'ammoniaque, séparation du sol formé et peptisation de ce produit dans l'eau.

Le poids de la solution finale est ajusté par ajout d'eau à 1000 g. La solution obtenue est alors séchée par atomisation sur un BUCHI dans les conditions suivantes :
- température des gaz en début de séchage : 240°C
- température de sortie des gaz : 150°C
- pression : 2,5 bars

La poudre résultante est calcinée à 5°C/mn jusqu'à 1000°C. Elle subit un palier de 2 heures.

Après cette calcination, l'analyse MEB-EDX montre que le produit se présente sous l'aspect d'une poudre homogène au µm³ dont la taille des particules est comprise entre 0,2 et 5µm, le diamètre moyen (CILAS) étant de 1,4µm.

Le spectre RX de la poudre calcinée à 1000°C montre que l'on obtient la phase Ba(Zn_{1/3}Ta_{2/3})O₃ pure (fig. 1).

### Préparation du produit fritté et surstructuré

On forme des pastilles en pressant la poudre ci-dessus à 2T/cm².

La pastille obtenue est chauffée à 1450°C à 10°C/mn et avec un palier de 3 heures. En fin de traitement, le produit présente une densité égale à 93% de la densité théorique.

Le produit densifié est broyé pour analyse aux RX. Le spectre RX agrandi est donné en figure 2. Le pic hachuré 1 correspond au pic (1,0,0) et indique l'existence d'une surstructure.

### EXEMPLE 2 COMPARATIF : Préparation de Ba(Zn_{1/3}Ta_{2/3})O₃ par chamottage

L'oxyde de baryum est tout d'abord broyé (mortier en agathe). Puis on mélange 23,4 g de BaO, 4,2 g de ZnO et 22,5 g de Ta₂O₅. Ce mélange est broyé au broyeur à anneaux pendant 30 secondes.

La poudre résultante est alors calcinée à 5°C/mn jusqu'à 1100°C, où elle est maintenue 2 heures en palier.

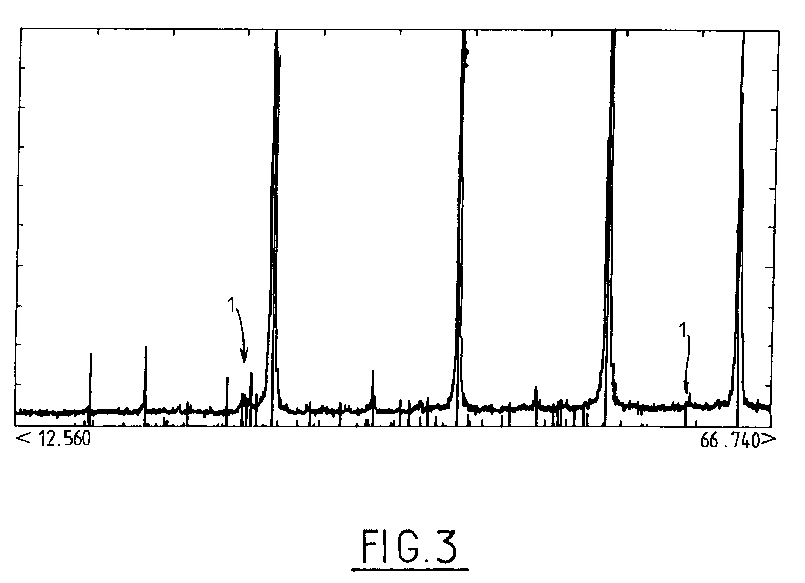

Le spectre RX de la poudre calcinée (fig. 3) indique que la phase Ba(Zn_{1/3}Ta_{2/3})O₃ est formée, mais il y a présence des phases Ba₄Ta₂O₉ et BaTa₂O₆(pic 1 notamment)

### EXEMPLE 3

### Préparation de Ba(Mg_{1/3}Ta_{2/3})O₃

On dissout 26,1 g de Ba(NO₃)₂, dans 200 g d'eau et 8,6 g de Mg(N0₃)₂, 6H₂O dans 100 g d'eau. On mélange les deux solutions. Puis on ajoute à cette solution 288 g de sol de Ta₂O₅ (soit 14,7 g de Ta₂O₅) du même type que celui de l'exemple 1.

Le poids de la solution finale est ajusté par ajout d'eau à 600 g. La solution obtenue est alors séchée par atomisation dans les conditions suivantes :
- température de gaz en début de séchage : 240°C
- température de sortie des gaz : 140°C
- pression : 2,5 bars

La poudre ainsi synthétisée est calcinée à 5°C/mn jusqu'à 900°C avec un palier de 2 heures.

Après cette calcination, le produit se présente sous l'aspect d'une poudre homogène au µm³ (MEB-EDX).

Le spectre RX de la poudre calcinée indique que la phase Ba(Mg_{1/3}Ta_{2/3})O₃ est pure.

## Revendications

**1 -** Compositions du type pérovskite à base de tantale et/ou de niobium et à titre d'autre élément constitutif d'un élément choisi dans le groupe comprenant les alcalins, les alcalino-terreux, les éléments de transition, les éléments du groupe Ib, les terres-rares, caractérisées en ce qu'elles présentent une homogénéité telle que les domaines d'hétérogénéité sont inférieurs ou égaux à 1µm³.

**2 -** Compositions du type pérovskite à base d'un premier élément constitutif choisi dans le groupe comprenant les alcalino-terreux et les terres rares et d'un second élément constitutif qui est le niobium ou le tantale, le second élément étant partiellement substitué par un troisième élément choisi dans le groupe comprenant les alcalins, les alcalino-terreux, les éléments de transition, les terres rares, les éléments du groupe IIIb, et Vb, caractérisées en ce qu'elles présentent une homogénéité telle que les domaines d'hétérogénéité sont inférieurs ou égaux à 1µm³.

**3 -** Compositions selon la revendication 2, caractérisées en ce que le premier élément est un alcalino-terreux, le second le tantale, le troisième un alcalino-terreux ou un élément de transition.

**4 -** Composition présentant une surstructuration, caractérisée en ce qu'elle est obtenue à partir d'une composition selon l'une des revendications précédentes, notamment d'une composition selon la revendication 3.

**5 -** Procédé de préparation de compositions du type pérovskite à base de tantale et/ou de niobium, caractérisé en ce qu'il comprend les étapes suivantes :
- on prépare un mélange comprenant d'une part, un sol d'oxyde de tantale et/ou un sol d'oxyde de niobium et d'autre part, des sels des autres éléments constitutifs de la composition;
- on sèche ledit mélange;
- on calcine le produit séché.

**6 -** Procédé selon la revendication 5, caractérisé en ce que l'on utilise des sels d'acides organiques et plus particulièrement des formiates, des acétates, des propionates, des citrates et/ou des oxalates.

**7 -** Procédé selon l'une des revendications 5 ou 6, caractérisé en ce que l'on utilise des sels d'acides inorganiques et plus particulièrement des nitrates.

**8 -** Procédé selon l'une des revendications 5 à 7, caractérisé en ce que l'on sèche le mélange précité par atomisation.

**9 -** Procédé selon la revendication précédente, caractérisé en ce que l'on sèche le mélange par atomisation de celui-ci suivant une trajectoire confondue avec l'axe de symétrie d'un écoulement hélicoïdal et puits-tourbillon de gaz chauds assurant la pulvérisation puis le séchage dudit mélange.

**10 -** Procédé selon l'une des revendications 5 à 9, caractérisé en ce qu'on prépare une composition du type pérovskite à base de tantale et/ou de niobium et à titre d'autre élément constitutif d'un élément choisi dans le groupe comprenant les alcalins, les alcalino-terreux, les éléments de transition, les éléments du groupe Ib, les terres rares, le plomb.

**11 -** Procédé selon l'une des revendications 5 à 9, caractérisé en ce qu'on prépare une composition du type pérovskite à base d'un premier élément constitutif choisi dans le groupe comprenant les alcalino-terreux, les terres rares et le plomb et d'un second élément constitutif qui est le niobium ou le tantale, le second élément étant partiellement substitué par un troisième élément choisi dans le groupe comprenant les alcalins, les alcalino-terreux, les éléments de transition, les terres rares, les éléments du groupe IIIb, et Vb et le plomb.

**12 -** Procédé selon la revendication 11, caractérisé en ce qu'on prépare une composition dans laquelle le premier élément est un alcalino-terreux, le second le tantale, le troisième un alcalino-terreux ou un élément de transition.

**13 -** Matériau fritté obtenu par frittage d'une composition selon l'une des revendications 1 à 3 ou d'une composition obtenue par un procédé selon les revendications 5 à 12.
